Europäisches Patentamt

**European Patent Office**

**Office européen des brevets**

(19)

(11) **EP 1 153 060 B1**

(12) **EUROPÄISCHE PATENTSCHRIFT**

(45) Veröffentlichungstag und Bekanntmachung des Hinweises auf die Patenterteilung:
**04.12.2002 Patentblatt 2002/49**

(21) Anmeldenummer: **99966946.8**

(22) Anmeldetag: **10.12.1999**

(51) Int Cl.$^7$: **C08G 73/00**

(86) Internationale Anmeldenummer:
**PCT/EP99/09784**

(87) Internationale Veröffentlichungsnummer:
**WO 00/037539 (29.06.2000 Gazette 2000/26)**

(54) **VERFAHREN ZUR HERSTELLUNG VON POLY-(1,4-PHENYLENAZIN-N,N-DIOXID) DURCH OXIDATION VON P-BENZOCHINONDIOXIM**

**METHOD FOR PRODUCING POLY-(1,4-PHENYLENAZINE-N,N-DIOXIDE) BY OXIDISING P-BENZOQUINONEDIOXIME**

**PROCEDE PERMETTANT DE PRODUIRE DU POLY-(1,4-PHENYLENAZINE-N,N-DIOXYDE) PAR OXYDATION DE LA P-BENZOQUINONE-DIOXIME**

(84) Benannte Vertragsstaaten:
**AT BE CH CY DE DK ES FI FR GB GR IE IT LI LU MC NL PT SE**

(30) Priorität: **21.12.1998 DE 19859097**

(43) Veröffentlichungstag der Anmeldung:
**14.11.2001 Patentblatt 2001/46**

(73) Patentinhaber: **Chemetall GmbH**
**60487 Frankfurt (DE)**

(72) Erfinder:
• **DEHNICKE, Stefan**
**D-63071 Offenbach (DE)**
• **LIST, Ernst**
**D-65933 Frankfurt am Main (DE)**
• **KRTSCH, Bernhard**
**D-65479 Raunheim (DE)**

• **ZELLNER, Adolf**
**D-84307 Eggenfelden (DE)**
• **RULLMANN, Helmut**
**Woodlands, TX 77381 (US)**

(74) Vertreter: **Uppena, Franz, Dr. et al**
**Dynamit Nobel Aktiengesellschaft,**
**Patente, Marken & Lizenzen**
**53839 Troisdorf (DE)**

(56) Entgegenhaltungen:
• **HACKER N.P.: "INVESTIGATION OF THE POLYMERIZATION OF 1,4-DINITROSOBENZENE BY LOW-TEMPERATURE INFRARED AND UV ABSOPTION SPECTROSCOPY" MACROMOLECULES, Bd. 26, 1993, Seiten 5937-5942, XP002133720**

EP 1 153 060 B1

**Beschreibung**

Die Erfindung betrifft ein Verfahren zur Herstellung von Poly-(1,4-phenylenazin-N,N-dioxid), welches auch als Poly-N,N-diazadioxid bezeichnet wird, und seinen kernsubstituierten Derivaten durch Oxidation von p-Benzochinondioxim, bzw. seinen entsprechenden kernsubstituierten Derivaten, mittels Polyanionen der Halogene Brom oder Iod.

Poly-(1,4-phenylenazin-N,N-dioxid) ist ein hochwirksamer Vernetzer in Kautschukmischungen oder Gummi-Metallbindemitteln. Darüber hinaus ist auch die Verwendung dieses Stoffes als wiederverwertbare Aufdampfchemikalie zur Herstellung elektronischer Schaltungen über Laserbeschriftungen (Solventless Laser-Imageable Resist Process) bekannt.

Zur Synthese von Poly-(1,4-phenylenazin-N,N-dioxid) und seinen kernsubstituierten Derivaten steht prinzipiell nur ein oxidativer Weg, ausgehend von p-Benzochinondioxim bzw. seinen kernsubstituierten Derivaten, zur Verfügung, da die Reduktion der entsprechenden Nitroverbindungen nicht auf der Stufe der Nitrosoverbindung aufgehalten werden kann. Als Oxidationsmittel sind beispielsweise Chlor, Stickstoffmonoxid/Natriumhypochlorit, Natriumchlorat, Salpetersäure, Eisen-III-Chlorid und Kaliumhexacyanoferrat (III) bekannt.

Primäres Reaktionsprodukt aller oben erwähnten Oxidationsreaktionen ist eine Dinitrosoverbindung. Kennzeichnend für nahezu alle p-Dinitrosoverbindungen ist ihre spontane Polymerisation zu Poly-N,N-azodioxiden. Beispielsweise liegt p-Dinitrosobenzol bei -240°C als Monomer und zwischen -90°C und -50°C als Dimer, bzw. Oligomer vor. Bei höheren Temperaturen (-10°C bis 100°C) findet man nur noch Poly-(1,4-phenylenazin-N,N-dioxid).

Nachteilig an den bisher bekannten Herstellverfahren ist in den meisten Fällen die anfallende, teilweise enorme Salzfracht. Die folgende Tabelle gibt Beispiele dafür:

Tabelle 1:

| Bei der Oxidation von p-Benzochinondioxim anfallende Salzfracht in Abhängigkeit vom eingesetzten Oxidationsmittel. | |
|---|---|
| Oxidationsmittel | Salzfracht pro 100 kg Poly-N,N-azodioxid |
| $K_3[Fe(CN)_6]$ | 510 kg Komplexsalz |
| $FeCl_3$ | 184 kg $FeCl_2$ |
| NO/NaOCl | 85 kg NaCl |
| $NaClO_3$/HCl | 85 kg NaCl |

Andere Verfahren sind salzfrachtfrei, zeigen dafür jedoch andere Nachteile. So ist die Oxidation mittels Salpetersäure bei Ausbeuten < 80% wenig wirtschaftlich und durch die Notwendigkeit, das Reaktionsprodukt wirksam waschen zu müssen, tritt eine nachteilige Bildung von Abwasser ein.

Die Oxidation mit elementarem Chlor verläuft zunächst über die Bildung von Salzsäure salzfrachtfrei, ebenso die Oxidation im System $H_2O_2$/Salzsäure. Hier wird aus Salzsäure und Wasserstoffperoxid in situ elementares Chlor freigesetzt (Gleichung 1). Das Chlor dient auch hier als eigentlich oxidierendes Agens.

$$2\ HCl + H_2O_2 \rightarrow Cl_2 + 2\ H_2O \tag{1}$$

$$Cl_2 + H_2O_2 \rightarrow 2Cl^- + 2\ H^+ + O_2 \tag{2}$$

Die mögliche Reaktion des gebildeten Chlors mit Wasserstoffperoxid gemäß Gleichung (2) kann zur Freisetzung von Sauerstoff führen. Eine direkte Oxidation von p-Benzochinondioximen mit Wasserstoffperoxid wird, auch bei erhöhter Reaktionstemperatur, nicht beobachtet.

Die anfallende Mutterlauge muß bei diesen Verfahren inklusive eventuell notwendiger Waschwässer neutralisiert werden, was wiederum zum Entstehen einer Salzfracht führt. Weiterhin nachteilig ist, daß eine weitergehende Oxidation des Reaktionsproduktes zu p-Dinitroverbindungen nicht ausgeschlossen werden kann. Diese Verbindungen sind explosiv und hochtoxisch.

Im Rahmen mechanistischer Betrachtungen verweisen A. Ermakov und Y.F. Komkova (Zh. Org. Khim. 20, 10, 2252 (1984) entsprechend der Oxidation mit Chlor (aus $H_2O_2$/Salzsäure) auf die Oxidation mit in situ gebildetem Iod (aus $H_2O_2$ und Kaliumiodid) analog Gleichung (1). Ein Herstellverfahren mit Iod oder in situ gebildetem Iod wird in dieser Schrift allerdings nicht beschrieben.

Die direkte Umsetzung von p-Benzochinondioxim mit elementarem Iod (Vergleichsbeispiel A) führt jedoch in wenig einheitlicher Reaktion erst nach relativ langen Reaktionszeiten zum primären Dinitrosoprodukt, das zudem in nur geringer Ausbeute erhalten werden kann. Elementares Iod erscheint damit als wenig taugliches Oxidationsmittel für die technische Oxidation von p-Benzochinondioximen.

Es existiert damit bis heute kein technisches Verfahren, das die quantitative Oxidation von p-Benzochinondioximen zu den entsprechenden Poly-N,N-diazadioxiden unter strikter Vermeidung der Bildung giftiger Dinitronebenprodukte erlaubt und das zusätzlich eine, auch mittelbare, Salzfracht vermeidet.

Aufgabe der Erfindung ist es daher, die Nachteile des Standes der Technik zu überwinden und ein Verfahren zur Herstellung von Poly-(1,4-phenylenazin-N,N-dioxid) und seinen kernsubstituierten Derivaten zu schaffen, das sich durch eine vollständige Umsetzung der Reaktionspartner unter Ausschluß der Bildung von Dinitroderivaten, die Vermeidung von Salzfrachten und eine deutliche Reduzierung der Abwassermengen auszeichnet.

Die Aufgabe wird durch das in Anspruch 1 angegebene Verfahren gelöst. Die Ansprüche 2 bis 12 bilden das Verfahren weiter.

Überraschend wurde gefunden, daß leicht zugängliche Derivate der Halogene, nämlich die Polyanionen, zu einer deutlichen Steigerung der Chemoselektivität der oben beschriebenen Oxidationsreaktionen führen. Polyanionen ($X_z^-$, $z \geq 3$) der Halogene (X) sind sehr einfach durch die Umsetzung von Halogenidionen ($X^-$) mit den Elementen zugänglich, z.B.:

$$X_2 + X^- \rightarrow X_3^- \tag{3}$$

Trihalogenide von Chlor, Brom und Iod bilden sich, wie aus den für das Lösungsmittel Wasser gültigen Gleichgewichtskonstanten gemäß Tabelle 2 ersichtlich ist, mit steigender Ordnungszahl zunehmend leichter.

Tabelle 2:

Gleichgewichtskonstanten der Trihalogenidbildung in Wasser ($X_2 + X^- \rightarrow X_3^-$)

$$K_{Chlor} = 0,01$$
$$K_{Brom} = 18$$
$$K_{Iod} = 725$$

Erkennbar ist zur Bildung von Trichloridionen ($Cl_3^-$) ein sehr großer Überschuß an Chloridionen notwendig. Experimente mit ansteigender Chloridionenkonzentration im System $HCl/H_2O_2$ führen tatsächlich zu einer gesteigerten Chemoselektivität des Oxidationsprozesses.

Wird die Oxidation bei gegebener Temperatur in 15 %iger Salzsäure durchgeführt, so wird das Poly-N,N-diazadioxid mit Ausbeuten von 90 bis 95 % erhalten und enthält ca. 1 % p-Dinitrobenzol. Eine Erhöhung der Konzentration an Salzsäure auf 25, bzw. 35 % führt mit p-Dinitrobenzolgehalten von nur noch 6000, bzw. 1200 ppm im Endprodukt zu einer deutlichen Verminderung der Nebenproduktbildung. Die gesteigerte chemische Selektivität ist allerdings mit einer Verminderung der isolierten Ausbeuten auf ca. 80 % verbunden. Die mit der Variation der Chloridionenkonzentration einhergehende Veränderung der Redoxpotentiale führt dabei also zu einem Verlust an Reaktivität.

Aufgrund der größeren Gleichgewichtskonstanten (Tabelle 2) muß bei den Halogenen Brom und Iod die Bromid- bzw. Iodidkonzentration nicht so hoch gewählt werden, um eine größere Selektivität zu erhalten. Daher sind lediglich die Polyanionen des Broms und des Iods von praktischer Bedeutung für das erfindungsgemäße Verfahren, wobei hauptsächlich Tribromid, bzw. Triiodid zum Einsatz kommt. Die oxidierenden Polyanionen sind in mindestens stöchiometrischer Menge und höchstens in doppelter stöchiometrischer Menge einzusetzen.

Als Tribromid, bzw. Triiodid kann vorteilhafterweise die entsprechende Alkaliverbindung eingesetzt werden.

Als Tribromid kann ein Alkalitribromid aus der Gruppe $LiBr_3$, $NaBr_3$ $KBr_3$, $RbBr_3$ und/oder $CsBr_3$ eingesetzt werden. Als Triiodid kann ein Alkalitriiodid aus der Gruppe $LiI_3$, $NaI_3$, $kI_3$, $RbI_3$ und/oder $CsI_3$ eingesetzt werden.

Das Tribromid, bzw. Triiodid kann, anstatt separat zugegeben zu werden, auch in situ aus einer Bromid-, bzw. Iodidverbindung und $H_2O_2$ hergestellt werden, wobei vorteilhafterweise die entsprechende Alkaliverbindung eingesetzt wird.

Besonders vorteilhaft läßt sich das Verfahren durchführen, wenn Triiodid ($I_3^-$) als Oxidationsmittel gewählt wird, welches in situ aus einem Alkaliiodid und $H_2O_2$ erhalten wird. Das Alkaliiodid kann dabei in katalytischer bis stöchiometrischer Menge von 0,1 bis 100 Mol%, bezogen auf die p-Benzochinondioximmenge, eingesetzt werden. Das primär gebildete Iod reagiert gemäß der in Tabelle 2 aufgeführten Gleichgewichtskonstanten spontan zum Alkalitriiodid. Eine Violettfärbung durch elementares Iod wird deshalb nicht beobachtet. Die Reaktion des so erhaltenen Triiodids mit p-Benzochinondioxim führt selektiv zur Bildung von Poly-N,N-diazadioxiden und Iodidionen.

Durch gesteuerte Zugabe von weiterem Wasserstoffperoxid wird aus dem freigesetzten Iodid erneut Triiodid gebildet. Es entsteht ein Katalysekreislauf, und es können LiI, NaI, KI, RbI oder CsI auch in kleinen, also nicht stöchiometrischen Dosierungen zur Synthese eingesetzt werden. Eine bevorzugte Einsatzmenge des Alkaliiodids ist 1 bis 5 Mol%, bezogen auf die eingesetzte p-Benzochinondioximmenge.

Die zugegebene $H_2O_2$-Menge beträgt typischerweise 100 bis 110 Mol%, bezogen auf p-Benzochinondioxim.

Eine bevorzugte Verfahrensvariante wird typischerweise wie folgt durchgeführt: p-Benzochinondioxim (bzw. eines seiner kernsubstituierten Derivate) wird in Wasser aufgeschlämmt und mit 1 bis 5 Mol% eines Alkaliiodids versetzt. Die gut gerührte Suspension wird dann bei einer zwischen 10 und 65°C gewählten Temperatur in 2 bis 4 Stunden mit 100 bis 110 Mol% $H_2O_2$ (bezogen auf eingesetztes p-Benzochinondioxim) in Form einer 30 %igen Wasserstoffperoxidlösung versetzt. Nach beendeter Zugabe wird noch 1 bis 2 Stunden bei gegebener Temperatur weitergerührt, um die Reaktion zu vervollständigen. Das gelbe bis hellbraune Reaktionsprodukt wird filtriert und mit wenig Wasser gewaschen. Mutterlauge und Filtrat werden vereinigt und können ohne weitere Behandlung erneut zur Synthese eingesetzt werden, so daß im Idealfall kein Abwasser entsteht.

Bevorzugt wird das erfindungsgemäße Verfahren bei einem pH-Wert von ca. 3 bis 7 durchgeführt. Bei diesem pH-Wert bildet sich das Verfahrensprodukt Poly-(1,4-phenylenazin-N,N-dioxid), bzw. eines seiner kernsubstituierten Derivate in sehr guten Ausbeuten als gut filtrierbarer, kristalliner Niederschlag. Ein niedrigerer pH-Wert führt tendenziell zu schlechteren Ausbeuten, ein höherer pH-Wert hat zur Folge, daß das Produkt als schlecht filtrierbare amorphe Masse ausfällt. pH-Wert-Korrekturen können z.B. mit kleinen Mengen Alkalihydroxid, wie NaOH oder KOH, oder z.B. mit kleinen Mengen Mineralsäuren, wie HBr oder HI vorgenommen werden.

Das nach dem erfindungsgemäßen Verfahren hergestellte Poly-(1,4-phenylenazin-N,N-dioxid) ist frei von p-Dinitrobenzol. Auch ein $H_2O_2$-Überschuß von 100% führt zu keiner Bildung von Dinitroderivaten. Das Verfahren ist somit hoch chemoselektiv.

Die isolierten Ausbeuten beim bevorzugten Triiodidoxidationsverfahren liegen zwischen 96 und 100 %, was einer quantitativen Umsetzung entspricht.

Der Gegenstand der Erfindung wird anhand der folgenden Beispiele näher erläutert:

**Vergleichsbeispiel A: Oxidation von p-Benzochinondioxim mit elementarem Iod ($I_2$)**

In einem Rundkolben wurden 27,6 g p-Benzochinondioxim (CD) (0,20 mol) und 25,4 g Iod (0,10 mol) in 320 ml Wasser bei Raumtemperatur gerührt. Nach 2 Tagen wurde eine Probe entnommen und getrocknet. Der erhaltene Feststoff war nahezu vollständig in Chloroform löslich. Die Bildung des in Chloroform sehr wenig löslichen Poly-(1,4-Phenylenazin-N,N-dioxid) konnte damit weitgehend ausgeschlossen werden. Nach einer Reaktionszeit von weiteren 6 Tagen wurde die Reaktionsmischung zur Trocknung eingedampft und anschließend in Chloroform aufgenommen. Nach Filtration und Trocknung konnten lediglich 0,90 g eines braun-schwarzen Feststoffes isoliert werden. Neben anderen Produkten zeigt das IR-Spektrum die Gegenwart von Poly-(1,4-Phenylenazin-N,N-dioxid) an.

**Beispiele 1 bis 9: Oxidation von p-Benzochinondioxim mit Triiodid $I_3^-$**

In den Beispielen 1 bis 9 wurde nach folgender allgemeiner Herstellvorschrift verfahren:

In einem 1 l - Vierhalskolben mit KPG-Rührer, Tropftrichter, Rückflußkühler und Innenthermometer wurden 41,4 g p-Benzochinondioxim (CD) (0,30 mol) in 250 ml Wasser vorgelegt und mit einer entsprechenden Menge Alkaliiodid (siehe Tabelle 3) versetzt. Zu dieser Mischung wurden dann im Laufe von 3 Stunden 35,5 g Perhydrol® ($H_2O_2$ 30 %ig) (0,31 mol $H_2O_2$) so zugetropft, daß die Innentemperatur des Reaktionsgefäßes beständig zwischen 20 und 40 °C lag. Der pH-Wert lag je nach Reinheit der Ausgangsstoffe zwischen 2,6 und 5,5.

Danach wurde 1 Stunde weitergerührt, anschließend abfiltriert und mit 50 ml Wasser gewaschen. Der erhaltene gelb-braune Feststoff wurde anschließend im Exsikkator über $P_2O_5$ bis zur Gewichtskonstanz getrocknet und mittels IR-Spektrum identifiziert. Die Ausbeuten des jeweils erhaltenen Poly-(1,4-phenylenazin-N,N-dioxid) sind in Tabelle 3 aufgeführt.

Tabelle 3:

| Alkaliiodid und dessen Einsatzmenge, sowie Ausbeute des erhaltenen Poly-(1,4-phenylenazin-N,N-dioxid) | | | |
|---|---|---|---|
| Bsp. | Alkaliiodid | Einsatzmenge Alkaliiodid [g] / [Mol%] auf CD | Ausbeute [g] / [%] |
| 1 | NaJ | 2,25/5,00 | 40,7 / 99,7 |
| 2 | KJ | 0,50 / 1,00 | 38,7 / 94,8 |
| 3 | KJ | 1,25/2,50 | 39,8 / 97,5 |
| 4 | KJ | 2,50 / 5,00 | 39,7 / 97,2 |

Tabelle 3: (fortgesetzt)

| Alkaliiodid und dessen Einsatzmenge, sowie Ausbeute des erhaltenen Poly-(1,4-phenylenazin-N,N-dioxid) | | | |
|---|---|---|---|
| Bsp. | Alkaliiodid | Einsatzmenge Alkaliiodid [g] / [Mol%] auf CD | Ausbeute [g] / [%] |
| 5 | CsJ | 1,95/2,50 | 39,8 / 97,5 |
| 6 | CsJ | 3,90/5,00 | 39,9 / 97,8 |
| 7 | KJ + CsJ* | 1,25 1,95/2,50 2,50 | 39,8 / 97,5 |
| 8 | CsJ** | 3,90/5,00 | 39,8 / 97,5 |
| 9 | CsJ*** | 3,90 / 5,00 | 40,6 / 99,5 |

\* Die Reaktion wurde bei 40 - 50 °C durchgeführt und zur Nachreaktion auf 65 °C erwärmt.

\*\* Mutterlauge aus Beispiel 6

\*\*\* $H_2O_2$ wurde mit 100% Überschuß dosiert; Nachreaktion 2 Stunden.

Das IR-Spektrum zeigte in allen Fällen die chemische Identität mit einem Referenzspektrum. p-Dinitrobenzol konnte in keinem Fall nachgewiesen werden (GC, Chloroformauszug gegen externen Standard). Die Produkte waren sämtlich sehr gut filtrierbar. Sie zeigten im Rasterelektronenmikroskop plättchen- und stäbchenförmige Kristalle von 0,5 bis 5 µm Kantenlänge (sporadisch bis 40 µm), die sich im allgemeinen zu kugelförmigen Agglomeraten von 10 bis 20 µm zusammenlagerten.

**Patentansprüche**

1. Verfahren zur Herstellung von Poly-(1,4-phenylenazin-N,N-dioxid) und seinen kernsubstituierten Derivaten durch Oxidation von p-Benzochinondioxim, bzw. seinen entsprechenden kernsubstituierten Derivaten, **dadurch gekennzeichnet, daß** die Oxidation mittels Polyanionen der Halogene Brom oder Iod (Polyanionen = $X_z^-$ mit z ≥ 3 und X = Br oder I) durchgeführt wird.

2. Verfahren nach Anspruch 1, **dadurch gekennzeichnet, daß** als Polyanion Tribromid $Br_3^-$ oder Triiodid $I_3^-$ eingesetzt wird.

3. Verfahren nach Anspruch 2, **dadurch gekennzeichnet, daß** als Tribromid ein Alkalitribromid aus der Gruppe $LiBr_3$, $NaBr_3$, $KBr_3$, $RbBr_3$ und/oder $CsBr_3$ eingesetzt wird.

4. Verfahren nach Anspruch 2 oder 3, **dadurch gekennzeichnet, daß** das Tribromid in situ aus dem entsprechenden Bromid $Br^-$ und Wasserstoffperoxid $H_2O_2$ erhalten wird.

5. Verfahren nach Anspruch 2, **dadurch gekennzeichnet, daß** als Triiodid ein Alkalitriiodid aus der Gruppe $LiI_3$, $NaI_3$, $KI_3$, $RbI_3$ und/oder $CsI_3$ eingesetzt wird.

6. Verfahren nach Anspruch 2 oder 5, **dadurch gekennzeichnet, daß** das Triiodid in situ aus dem entsprechenden Iodid $I^-$ und Wasserstoffperoxid $H_2O_2$ erhalten wird.

7. Verfahren nach Anspruch 6, **dadurch gekennzeichnet, daß** als Iodid ein Alkaliiodid in einer Menge von 0,1 bis 100 Mol% relativ zum p-Benzochinondioxim, bzw. zu einem seiner kernsubstituierten Derivate, eingesetzt wird.

8. Verfahren nach Anspruch 7, **dadurch gekennzeichnet, daß** das Alkaliiodid in einer Menge von 1 bis 5 Mol% relativ zum p-Benzochinondioxim, bzw. zu einem seiner kernsubstituierten Derivate, eingesetzt wird.

9. Verfahren nach einem der Ansprüche 6 bis 8, **dadurch gekennzeichnet, daß** das $H_2O_2$ in einer Menge von 100 bis 110 Mol% relativ zum p-Benzochinondioxim, bzw. zu einem seiner kernsubstituierten Derivate, eingesetzt wird.

10. Verfahren nach einem der Ansprüche 1 bis 9, **dadurch gekennzeichnet, daß** das p-Benzochinondioxim, bzw. eines seiner kernsubstituierten Derivate, vor der Oxidation in Wasser aufgeschlämmt wird.

11. Verfahren nach einem der Ansprüche 1 bis 10, **dadurch gekennzeichnet, daß** die Reaktionstemperatur 10 bis 65 °C beträgt.

12. Verfahren nach einem der Ansprüche 1 bis 11, **dadurch gekennzeichnet, daß** die Reaktion bei einem pH-Wert von 3 bis 7 durchgeführt wird.

## Claims

1. Process for the preparation of poly-(1,4-phenyleneazine N,N-dioxide) and its nuclearly substituted derivatives, by oxidation of p-benzoquinonedioxime or its corresponding nuclearly substitute derivatives, **characterised in that** the oxidation is carried out by means of polyanions of the halogens bromine or iodine (polyanions = $X_z^-$ wherein $z \geq 3$ and X = Br or I).

2. Process according to claim 1, **characterised in that** a tribromide $Br_3^-$ or triiodide $I_3^-$ is used as the polyanion.

3. Process according to claim 2, **characterised in that** an alkali tribromide from the group $LiBr_3$, $NaBr_3$, $KBr_3$, $RbBr_3$ and/or $CsBr_3$ is used as the tribromide.

4. Process according to claim 2 or 3, **characterised in that** the tribromide is obtained *in situ* from the corresponding bromide $Br^-$ and hydrogen peroxide $H_2O_2$.

5. Process according to claim 2, **characterised in that** an alkali triiodide from the group $LiI_3$, $NaI_3$, $KI_3$, $RbI_3$ and/or $CsI_3$ is used as the triiodide.

6. Process according to claim 2 or 5, **characterised in that** the triiodide is obtained *in situ* from the corresponding iodide $I^-$ and hydrogen peroxide $H_2O_2$.

7. Process according to claim 6, **characterised in that** the iodide used is an alkali iodide in an amount of from 0.1 to 100 mol% relative to the p-benzoquinonedioxime or to a nuclearly substituted derivative thereof.

8. Process according to claim 7, **characterised in that** the alkali iodide is used in an amount of from 1 to 5 mol% relative to the p-benzoquinonedioxime or to a nuclearly substituted derivative thereof.

9. Process according to any one of claims 6 to 8, **characterised in that** the $H_2O_2$ is used in an amount of from 100 to 110 mol% relative to the p-benzoquinonedioxime or nuclearly substituted derivative thereof.

10. Process according to any one of claims 1 to 9, **characterised in that** the p-benzoquinonedioxime or a nuclearly substituted derivative thereof is suspended in water prior to the oxidation.

11. Process according to any one of claims 1 to 10, **characterised in that** the reaction temperature is from 10 to 65°C.

12. Process according to any one of claims 1 to 11, **characterised in that** the reaction is carried out at a pH value from 3 to 7.

## Revendications

1. Procédé de préparation de poly(1,4-phénylèneazine-N,N-dioxyde) et de dérivés à noyau substitué de celui-ci, par oxydation de p-benzoquinonedioxime ou des dérivés à noyau substitué correspondants, **caractérisé par le fait que** l'oxydation de fait à l'aide de polyanions de brome ou d'iode (polyanions = $X_z^-$ où $z \geq 3$ et X = Br ou I).

2. Procédé selon la revendication 1, **caractérisé par le fait que** l'on utilise en tant que polyanion du tribromure ($Br_3^-$) ou du triiodure ($I_3^-$).

3. Procédé selon la revendication 2, **caractérisé par le fait que** l'on utilise en tant que tribromure un tribromure de métal alcalin choisi dans le groupe formé par $LiBr_3$, $NaBr_3$, $KBr_3$, $RbBr_3$ et/ou CsBr.

4. Procédé selon la revendication 2 ou 3, **caractérisé par** le fait le l'on obtient le tribromure *in situ* à partir du bromure Br⁻ correspondant et de peroxyde d'hydrogène $H_2O_2$.

5. Procédé selon la revendication 2, **caractérisé par le fait que** l'on utilise en tant que triiodure un triiodure de métal alcalin choisi dans le groupe formé par $LiI_3$, $NaI_3$, $KI_3$, $RbI_3$ et/ou $CsI_3$.

6. Procédé selon la revendication 2 ou 5, **caractérisé par** le fait le l'on obtient le triiodure *in situ* à partir de l'iodure I⁻ correspondant et de peroxyde d'hydrogène $H_2O_2$.

7. Procédé selon la revendication 6, **caractérisé par le fait que** l'on utilise, en tant qu'iodure, un iodure de métal alcalin en une quantité comprise entre 0,1 et 100 % en moles, rapportée à la quantité de p-benzoquinonedioxime ou d'un dérivé à noyau substitué de celui-ci.

8. Procédé selon la revendication 7, **caractérisé par le fait que** l'iodure de métal alcalin est utilisé en une quantité comprise entre 1 et 5 % en moles, rapportée à la quantité de p-benzoquinonedioxime ou d'un dérivé à noyau substitué de celui-ci.

9. Procédé selon l'une des revendications 6 à 8, **caractérisé par le fait que** le $H_2O_2$ est utilisé en une quantité comprise entre 100 et 110 % en moles, rapportée à la quantité de p-benzoquinonedioxime ou d'un dérivé à noyau substitué de celui-ci.

10. Procédé selon l'une des revendications 1 à 9, **caractérisé par le fait que** le p-benzoquinonedioxime ou un dérivé à noyau substitué de celui-ci est mis en suspension dans de l'eau avant l'oxydation.

11. Procédé selon l'une des revendications 1 à 10, **caractérisé par le fait que** la température réactionnelle est comprise entre 10 et 65 °C.

12. Procédé selon l'une des revendications 1 à 11, **caractérisé par le fait que** la réaction se fait à un pH compris entre 3 et 7.